# EUROPÄISCHE PATENTSCHRIFT

(11) **EP 2 707 161 B1**
(45) Veröffentlichungstag und Bekanntmachung des Hinweises auf die Patenterteilung: **13.04.2016**
(21) Anmeldenummer: 11721262.1
(22) Anmeldetag: 10.05.2011
(51) Int. Cl.: B21D 11/06, B21D 53/02, F24H 1/16, F24H 1/43

(54) **WÄRMETAUSCHER UND VERFAHREN ZU DESSEN HERSTELLUNG**
HEAT EXCHANGER AND METHOD FOR ITS PRODUCTION
ÉCHANGEUR THERMIQUE ET PROCÉDÉ POUR SA CONSTRUCTION

(43) Veröffentlichungstag der Anmeldung: 19.03.2014
(73) Patentinhaber: Alfred Kärcher GmbH & Co. KG, 71364 Winnenden (DE)
(72) Erfinder: BÖHM, Michael, 71560 Sulzbach (DE); EHRHARDT, Stefan, 71364 Winnenden (DE); MUNZ, Siegmar, 74586 Frankenhardt (DE)
(74) Vertreter: Hoeger, Stellrecht & Partner Patentanwälte mbB
(86) Internationale Anmeldenummer: PCT/EP2011/057480
(87) Internationale Veröffentlichungsnummer: WO 2012/152313

(56) Entgegenhaltungen:
- EP-A2- 1 255 085
- US-A- 1 614 242
- US-A- 1 618 434
- US-A- 1 650 919
- US-A- 2 998 807
- US-A- 3 051 146
- US-A- 5 845 609

## Beschreibung

Die Erfindung betrifft einen Wärmetauscher zum Erhitzen einer Flüssigkeit, insbesondere für Hochdruckreiniger, mit einer inneren und einer äußeren Heizwicklung, die jeweils eine Vielzahl von Windungen aufweisen, und mit Abstandshaltern, die zwischen der inneren und der äußeren Heizwicklung über den Umfang der inneren Heizwicklung verteilt angeordnet sind.

Außerdem betrifft die Erfindung Verfahren zur Herstellung eines derartigen Wärmetauschers, wobei aus einem Rohr eine innere Heizwicklung gewickelt wird, an der Außenseite der inneren Heizwicklung mehrere Abstandshalter über den Umfang der inneren Heizwicklung verteilt angeordnet und fixiert werden, und aus dem Rohr eine äußere Heizwicklung auf die Abstandshalter gewickelt wird.

Derartige Wärmetauscher kommen insbesondere zum Erhitzen einer Reinigungsflüssigkeit für Hochdruckreiniger zum Einsatz. Die Wärmetauscher bilden eine Doppelrohrwendel aus, die eine innere und eine äußere Heizwicklung umfasst. Die innere Heizwicklung definiert einen Brennraum, in dem eine Brennstoffdüse positioniert werden kann. Dies gibt die Möglichkeit, im Brennraum eine Flamme zu zünden, so dass der Wärmetauscher von heißer Luft umströmt wird. Der Wärmetauscher kann von der Reinigungsflüssigkeit durchströmt werden. Es findet dann ein Wärmeübergang statt von der heißen Luft über die Heizwicklungen auf die zu erhitzende Flüssigkeit, die anschließend auf einen zu reinigenden Gegenstand gerichtet werden kann.

Die Wärmetauscher werden somit als Durchlauferhitzer eingesetzt. Um den Wirkungsgrad der Wärmetauscher zu verbessern, wird in der EP 1 255 085 B1 vorgeschlagen, die Abstandshalter so mit unterschiedlichen radialen Vertiefungen für die Windungen der äußeren Heizwicklung auszugestalten, dass die Windungen zumindest teilweise radial zueinander versetzt angeordnet sind. Dies ermöglicht einen verbesserten Wärmeübergang von der erhitzten Luft auf die Heizwicklungen. Hierzu muss allerdings eine große Zahl speziell ausgestalteter Abstandshalter zum Einsatz kommen, deren Positionierung an der Außenseite der inneren Heizwicklung sorgfältig gewählt werden muss.

Aufgabe der vorliegenden Erfindung ist es, einen Wärmetauscher der gattungsgemäßen Art sowie ein Verfahren zu dessen Herstellung bereitzustellen, wobei der Wärmetauscher kostengünstiger hergestellt werden kann und einen hohen Wirkungsgrad aufweist.

Diese Aufgabe wird bei einem Wärmetauscher der eingangs beschriebenen Art erfindungsgemäß dadurch gelöst, dass mindestens eine Windung der äußeren Heizwicklung zwischen zwei einander unmittelbar benachbarten Abstandshaltern einen ersten Windungsabschnitt aufweist, in dem der radiale Abstand zur inneren Heizwicklung kleiner oder größer ist als im Bereich der Abstandshalter.

Bezogen auf die Umfangsrichtung des Wärmetauschers variiert somit zumindest im Bereich einer Windung der äußeren Heizwicklung der radiale Abstand, den die Windung zur inneren Heizwicklung einnimmt. Während der radiale Abstand der Windung im Bereich der Abstandshalter einen bestimmten Wert aufweisen kann, der durch die Gestalt der Abstandshalter vorgegeben ist, ändert sich der radiale Abstand in mindestens einem ersten Windungsabschnitt zwischen zwei einander unmittelbar benachbarten Abstandshaltern. Mindestens eine Windung der äußeren Heizwicklung weist somit zumindest in einem ersten Windungsabschnitt zwischen zwei einander unmittelbar benachbarten Abstandshaltern einen kleineren oder einen größeren radialen Abstand zur inneren Heizwicklung auf als im Bereich der Abstandshalter.

Es hat sich gezeigt, dass durch den entlang des Umfanges zwischen den Abstandshaltern variierenden radialen Abstand, den die mindestens eine Windung der äußeren Heizwicklung zur inneren Heizwicklung einnimmt, der Wärmeübergang zwischen der erhitzten Luft und der den Wärmetauscher durchströmenden Flüssigkeit verbessert werden kann, so dass der Wärmetauscher einen hohen Wirkungsgrad aufweist.

Von Vorteil ist es, wenn mehrere Windungen der äußeren Heizwicklung jeweils zwischen zwei einander unmittelbar benachbarten Abstandshaltern einen ersten Windungsabschnitt aufweisen, in dem der Abstand zur inneren Heizwicklung kleiner oder größer ist als im Bereich der Abstandshalter. Es kann beispielsweise vorgesehen sein, dass eine erste Windung der äußeren Heizwicklung über den Umfang des Wärmetauschers einen gleich bleibenden Abstand zur inneren Heizwicklung einnimmt, wohingegen eine sich in Wicklungsrichtung der äußeren Heizwicklung an die erste Windung anschließende zweite Windung zur inneren Heizwicklung einen sich über den Umfang des Wärmetauschers verändernden radialen Abstand einnimmt. An die zweite Windung kann sich in Wicklungsrichtung eine dritte Windung der äußeren Heizwicklung anschließen, die entsprechend der ersten Windung wieder einen über den Umfang des Wärmetauschers gleich bleibenden Abstand zur inneren Heizwicklung einnimmt. Eine vierte Windung kann sich dann an die dritte Windung der äußeren Heizwicklung anschließen, deren Abstand zur inneren Heizwicklung sich über den Umfang des Wärmetauschers verändert.

Sofern mehrere Windungen der äußeren Heizwicklung jeweils in einem ersten Windungsabschnitt zwischen zwei einander unmittelbar benachbarten Abstandshaltern einen kleineren oder größeren radialen Abstand zur inneren Heizwicklung aufweisen als im Bereich der Abstandshalter, ist es von Vorteil, wenn die ersten Windungsabschnitte von mindestens zwei Windungen in Umfangsrichtung der äußeren Heizwicklung versetzt zueinander angeordnet sind. Bezogen auf die Längsachse des Wärmetauschers kann ein erster Windungsabschnitt einer ersten Windung der äußeren Heizwicklung in einem ersten Winkelbereich positioniert sein, und der erste Windungsabschnitt einer zweiten Windung der äußeren Heizwicklung kann in einem zweiten Winkelbereich positioniert sein, der in Umfangsrichtung versetzt zum ersten Winkelbereich angeordnet ist.

Bei einer vorteilhaften Ausführungsform sind die ersten Windungsabschnitte von mindestens zwei Windungen um 270° versetzt zueinander angeordnet. Eine derartige Ausgestaltung ist insbesondere dann von Vorteil, wenn der Wärmetauscher insgesamt vier Abstandshalter aufweist, die in Umfangsrichtung gleichmäßig verteilt zueinander angeordnet sind.

Weisen mehrere Windungen der äußeren Heizwicklung jeweils in einem ersten Windungsabschnitt zwischen zwei einander unmittelbar benachbarten Abstandshaltern einen kleineren oder größeren radialen Abstand zur inneren Heizwicklung auf als im Bereich der Abstandshalter, so kann vorgesehen sein, dass die ersten Windungsabschnitte der Windungen in demselben Umfangsbereich der äußeren Heizwicklung angeordnet sind. Bei einer derartigen Ausgestaltung der Erfindung können mehrere Windungen der äußeren Heizwicklung in einem gemeinsamen Umfangsbereich zwischen zwei einander unmittelbar benachbarten Abstandshaltern jeweils einen Windungsabschnitt umfassen, in dem der radiale Abstand größer oder kleiner ist als im Bereich der beiden Abstandshalter. Insbesondere kann vorgesehen sein, dass mehrere in Wicklungsrichtung aufeinander folgende Windungen der äußeren Heizwicklung jeweils in demselben Umfangsbereich einen ersten Windungsabschnitt aufweisen, in dem der Abstand zur inneren Heizwicklung kleiner oder größer ist als im Bereich der Abstandshalter, die den ersten Windungsabschnitt begrenzen. Die ersten Windungsabschnitte können somit bezogen auf die Längsachse des Wärmetauschers in einer Reihe nebeneinander angeordnet sein.

Bei einer bevorzugten Ausgestaltung des erfindungsgemäßen Wärmetauschers weist mindestens eine Windung der äußeren Heizwicklung zwei in Umfangsrichtung aufeinander folgende Windungsabschnitte auf, die jeweils zwischen zwei einander unmittelbar benachbarten Abstandshaltern angeordnet sind und in denen die Windung unterschiedliche radiale Abstände zur inneren Heizwicklung einnimmt. Jede Windung der äußeren Heizwicklung erstreckt sich über einen Umfangsbereich von insgesamt 360°. Dieser Umfangsbereich wird von den Abstandshaltern unterteilt, und mindestens eine Windung der äußeren Heizwicklung weist zwei in Umfangsrichtung aufeinander folgende Abschnitte auf, die jeweils zwischen zwei Abstandshaltern angeordnet sind und in denen die Windung unterschiedliche radiale Abstände zur inneren Heizwicklung einnimmt. Eine derartige Abstandsvariation muss jedoch nicht zwingend bei sämtlichen Windungen der äußeren Heizwicklung zum Einsatz kommen, vielmehr kann vorgesehen sein, dass die äußere Heizwicklung zusätzlich zu Windungen mit über den Umfang variierendem radialen Abstand zur inneren Heizwicklung weitere Windungen aufweist, die sich durch einen über den Umfang gleich bleibenden Abstand zur inneren Heizwicklung auszeichnen.

Es kann vorgesehen sein, dass mindestens eine Windung der äußeren Heizwicklung in einem ersten Windungsabschnitt zwischen zwei einander in Umfangsrichtung unmittelbar benachbarten Abstandshaltern einen kleineren radialen Abstand zur inneren Heizwicklung aufweist als im Bereich der beiden Abstandshalter, und dass sich in Umfangsrichtung der äußeren Heizwicklung an den ersten Windungsabschnitt ein zweiter Windungsabschnitt anschließt, in dem der radiale Abstand zur inneren Heizwicklung größer ist als im Bereich der Abstandshalter.

Günstig ist es, wenn die Abstandshalter über ihre gesamte Länge einen gleich bleibenden Abstand zwischen der inneren und der äußeren Heizwicklung definieren. Dies ermöglicht eine besonders einfache Montage der Abstandshalter und hat darüber hinaus den Vorteil, dass die Positionierung der Abstandshalter am Außenumfang der inneren Heizwicklung nicht exakt vorgegeben werden muss.

Bevorzugt sind die Abstandshalter des Wärmetauschers identisch ausgestaltet. Dies erleichtert die Herstellung und Montage des Wärmetauschers und ermöglicht damit eine weitere Kostensenkung.

Der radiale Abstand, den die äußere Heizwicklung in dem mindestens einen ersten Windungsabschnitt zur inneren Heizwicklung einnimmt, beträgt günstigerweise minimal 10 % des radialen Abstandes, den die äußere Heizwicklung im Bereich der den ersten Windungsabschnitt begrenzenden Abstandshalter zur inneren Heizwicklung einnimmt.

Vorzugsweise beträgt der radiale Abstand, den die äußere Heizwicklung im ersten Windungsabschnitt zur inneren Heizwicklung einnimmt, maximal 200 % des radialen Abstandes, den die äußere Heizwicklung im Bereich der den ersten Windungsabschnitt begrenzenden Abstandshalter zur inneren Heizwicklung einnimmt.

Bei einer vorteilhaften Ausführungsform variiert der radiale Abstand, den die äußere Heizwicklung im Bereich mindestens einer Windung einnimmt, zwischen minimal 10 % und maximal 200 % des Abstandes, den die äußere Heizwicklung im Bereich der Abstandshalter einnimmt.

Die innere Heizwicklung ist bei einer besonders bevorzugten Ausgestaltung des erfindungsgemäßen Wärmetauschers kreiszylindrisch ausgebildet. Die Windungen der inneren Heizwicklung erstrecken sich somit konzentrisch um die Längsachse des Wärmetauschers und definieren einen zylindrischen Brennraum.

Die Abstandshalter sind vorzugsweise an die Außenseite der inneren Heizwicklung angeschweißt.

Von Vorteil ist es, wenn die äußere Heizwicklung einen ersten Teillängsbereich umfasst, in dem der mindestens eine erste Windungsabschnitt angeordnet ist, und sich in Längsrichtung der äußeren Heizwicklung an den ersten Teillängsbereich ein zweiter Teillängsbereich anschließt, in dem die äußere Heizwicklung einen gleich bleibenden Abstand zur inneren Heizwicklung aufweist.

Der erste Teillängsbereich erstreckt sich günstigerweise maximal über 75 % der Gesamtlänge der äußeren Heizwicklung.

Von Vorteil ist es, wenn die in Höhe des ersten Teillängsbereichs angeordneten Windungen der inneren Heizwicklung unmittelbar aneinander anliegen.

Zumindest einige der in Höhe des zweiten Teillängsbereichs angeordneten Windungen der inneren Heizwicklung sind bei einer vorteilhaften Ausgestaltung der Erfindung in axialem Abstand zueinander angeordnet.

Bevorzugt sind zumindest einige Windungen der äußeren Heizwicklung im ersten Teillängsbereich in axialem Abstand zueinander angeordnet. Der axiale Abstand zwischen den Windungen der äußeren Heizwicklung kann im ersten Teillängsbereich beispielsweise mindestens 3 mm und maximal 30 mm betragen.

Die äußere Heizwicklung ist ebenso wie die innere Heizwicklung aus einem Rohr gewickelt. Günstig ist es, wenn zumindest zwei Windungen der äußeren Heizwicklung im ersten Teillängsbereich in einem axialen Abstand zueinander angeordnet sind, der mindestens so groß ist wie der Außendurchmesser des Rohrs.

Wie eingangs bereits erwähnt, ist der erfindungsgemäße Wärmetauscher in Form einer Doppelrohrwendel ausgebildet. Hierbei wird aus einem Rohr eine innere Heizwicklung gewickelt, an deren Außenseite mehrere Abstandshalter über den Umfang der inneren Heizwicklung verteilt angeordnet und fixiert werden. Die Abstandshalter erstrecken sich in Längsrichtung der inneren Heizwicklung und auf die Abstandshalter wird aus dem Rohr eine äußere Heizwicklung aufgewickelt.

Die eingangs genannte Aufgabe wird bei einem ersten erfindungsgemäßen Herstellungsverfahren dadurch gelöst, dass mindestens eine Windung der äußeren Heizwicklung in einem ersten Windungsabschnitt zwischen zwei einander unmittelbar benachbarten Abstandshaltern in Richtung auf die innere Heizwicklung verformt wird. Bei diesem erfindungsgemäßen Verfahren wird zunächst in an sich bekannter Weise eine Doppelrohrwendel gebildet. Anschließend wird mindestens eine Windung der äußeren Heizwicklung im Bereich zwischen zwei einander unmittelbar benachbarten Abstandshaltern in Richtung auf die innere Heizwicklung verformt. Im Bereich zwischen den Abstandshaltern nimmt die mindestens eine Windung somit einen geringeren radialen Abstand zur inneren Heizwicklung ein als im Bereich der Abstandshalter. Zum Verformen kann eine Pressvorrichtung zum Einsatz kommen mit einem Pressstempel, der vorzugsweise mittig zwischen zwei einander unmittelbar benachbarten Abstandshaltern an mindestens einer Windung der äußern Heizwicklung positioniert und anschließend in Richtung auf die innere Heizwicklung, vorzugsweise in radialer Richtung, bewegt wird, so dass die Windung verformt wird.

Beim Verformen stützt sich die mit der Verformungskraft beaufschlagte Windung an den Abstandshaltern ab. Das Verformen einer Windung im Bereich zwischen zwei Abstandshaltern hat zur Folge, dass die Windung im Bereich zwischen den beiden Abstandshaltern einen kleineren Abstand und in den unmittelbar benachbarten Bereichen jenseits der beiden Abstandshalter einen größeren Abstand zur inneren Heizwicklung einnimmt als im Bereich der Abstandshalter. Zumindest eine Windung der zunächst zylindrischen äußeren Heizwicklung erhält somit durch den Verformungsvorgang eine ovale Gestalt, wobei sie im Bereich zwischen zwei einander unmittelbar benachbarten Abstandshaltern einen kleineren radialen Abstand einnimmt als im Bereich der Abstandshalter, und in den sich an die beiden Abstandshalter jeweils unmittelbar anschließenden Bereichen verformt sich die Windung radial nach außen, so dass sich deren Abstand zur inneren Heizwicklung vergrößert.

Vorzugsweise werden mehrere Windungen der äußeren Heizwicklung gleichzeitig jeweils in einem ersten Windungsabschnitt zwischen zwei einander unmittelbar benachbarten Abstandshaltern in Richtung auf die innere Heizwicklung verformt. Hierzu kann ein Pressstempel zum Einsatz kommen, dessen Form und Abmaße an die Gestalt der äußeren Heizwicklung derart angepasst sind, dass bei einem Verformungsvorgang mehrere Windungen der äußeren Heizwicklung gleichzeitig verformt werden können. Die verformten Windungen können in Wicklungsrichtung der äußeren Heizwicklung unmittelbar aufeinander folgen. Es kann aber auch vorgesehen sein, dass zumindest zwischen zwei verformten Windungen der äußeren Heizwicklung eine oder mehrere unverformte Windungen angeordnet sind.

Von Vorteil ist es, wenn der Wärmetauscher nach dem Verformen von mindestens einer Windung um die Längsachse des Wärmetauschers gedreht wird und anschließend mindestens eine weitere Windung der äußeren Heizwicklung in einem ersten Windungsabschnitt zwischen zwei einander unmittelbar benachbarten Abstandshaltern in Richtung auf die innere Heizwicklung verformt wird. Die äußere Heizwicklung wird bei einer derartigen Ausführungsform des erfindungsgemäßen Verfahrens mindestens zweimal nacheinander verformt, wobei sie nach dem ersten Verformungsvorgang um die Längsachse des Wärmetauschers gedreht wird. Einzelne Windungen der äußeren Heizwicklung erhalten durch das Verformen jeweils eine ovale Gestalt, wobei die ersten Windungsabschnitte von mindestens zwei Windungen in Umfangsrichtung der äußeren Heizwicklung versetzt zueinander angeordnet sind.

Günstigerweise wird der Wärmetauscher nach einem ersten Verformungsvorgang um einen Winkel von 270° um seine Längsachse gedreht, um anschließend erneut verformt zu werden.

Es kann auch vorgesehen sein, dass der Wärmetauscher nach dem Verformen von mindestens einer Windung relativ zu einem Pressstempel in Richtung der Längsachse des Wärmetauschers versetzt wird und anschließend mindestens eine weitere Windung der äußeren Heizwicklung in einem ersten Windungsabschnitt zwischen zwei einander unmittelbar benachbarten Abstandshaltern in Richtung auf die innere Heizwicklung verformt wird. Die Bereitstellung verformter Windungsabschnitte in demselben Umfangsbereich der äußeren Heizwicklung kann somit in mehreren Verformungsvorgängen erfolgen, zwischen denen der Wärmetauscher jeweils relativ zum Pressstempel axial versetzt wird. Dies gibt insbesondere die Möglichkeit, bei jedem Verformungsvorgang nur eine einzige Windung zu verformen. Anschließend kann dann der Wärmetauscher axial versetzt werden, um eine weitere Windung im Bereich zwischen zwei einander unmittelbar benachbarten Abstandshaltern zu verformen.

Von Vorteil ist es, wenn der Wärmetauscher nach dem Verformen von einer Windung soweit relativ zum Pressstempel axial versetzt wird, dass sich zwischen der bereits verformten Windung und einer nachfolgend zu verformenden Windung mindestens eine unverformte Windung erstreckt, d. h. eine Windung, die keine Verformung erfährt.

Die Abstandshalter werden günstigerweise über den Umfang der inneren Heizwicklung gleichmäßig verteilt angeordnet. Insbesondere kann vorgesehen sein, dass insgesamt vier Abstandshalter zum Einsatz kommen, die in Umfangsrichtung um 90° zueinander versetzt angeordnet werden.

Die Abstandshalter werden günstigerweise identisch ausgebildet.

Bevorzugt definieren die Abstandshalter über ihre gesamte Länge einen gleich bleibenden Abstand zwischen der inneren und der äußeren Heizwicklung.

Wie bereits erwähnt, ist es von Vorteil, wenn die Abstandshalter mit der inneren Heizwicklung verschweißt werden.

Es kann vorgesehen sein, dass zumindest einige Windungen der äußeren Heiz wicklung mit den Abstandshaltern verschweißt sind.

Zum Verformen von mindestens einer Windung der äußeren Heizwicklung kommt, darauf wurde schon hingewiesen, vorzugsweise ein Pressstempel zum Einsatz. Dieser kann derart ausgebildet sein, dass einzelne oder mehrere Windungen der äußeren Heizwicklung verformt werden, wobei die Einpresstiefe pro Pressvorgang und Windung unterschiedlich sein kann. Es kann allerdings auch vorgesehen sein, dass die Einpresstiefe konstant ist.

Es hat sich überraschenderweise gezeigt, dass eine hohe Genauigkeit und Maßhaltigkeit der Verformung eine untergeordnete Rolle spielt. Durch die Verformung von mindestens einer Windung in mindestens einem ersten Windungsabschnitt zwischen zwei Abstandshaltern wird der Wirkungsgrad des Wärmetauschers gesteigert. Durch die unregelmäßige Gestalt der äußeren Heizwicklung wird die erhitzte Luft besser verwirbelt und dadurch der Wärmeübergang verbessert.

Die Abstandshalter können mit einer geringen Anzahl von Schweißpunkten an der inneren Heizwicklung festgelegt werden. Die reduziere Anzahl an Schweißpunkten führt zu einer erhöhten Lebensdauer, da thermische Spannungen gering gehalten werden können.

Günstigerweise stützen sich die Windungen der inneren und/oder äußeren Heizwicklung formschlüssig an den Abstandshaltern ab.

Die Position, Anzahl und Ausführung der Verformungen der vorzugsweise zunächst kreiszylindrischen äußeren Heizwicklung kann zur Optimierung des Wirkungsgrades des Wärmetauschers in weiten Bereichen variiert werden. Insbesondere kann die Verformung an die Gestalt eines Kessels angepasst werden, in dem der Wärmetauscher positioniert werden soll.

Anstatt die äußere Heizwicklung nachträglich in mindestens einem Windungsabschnitt zwischen zwei einander unmittelbar benachbarten Abstandshaltern zu verformen, wird bei einem zweiten erfindungsgemäßen Verfahren zur Herstellung des eingangs genannten Wärmetauschers das zum Einsatz kommende Rohr beim Herstellen der äußeren Heizwicklung in mindestens einem Windungsabschnitt zwischen zwei einander unmittelbar benachbarten Abstandshaltern in einem Abstand zur inneren Heizwicklung auf die innere Heizwicklung aufgewickelt, der größer oder kleiner ist als der Abstand, den das Rohr im Bereich der Abstandshalter zur inneren Heizwicklung einnimmt. Bei einem derartigen Herstellungsverfahren wird somit bereits beim Aufwickeln der äußeren Heizwicklung der Abstand im Bereich zwischen mindestens zwei einander unmittelbar benachbarten Abstandshaltern variiert. Dies hat den Vorteil, dass ein nachfolgender Verformungsvorgang entfallen kann.

Die Variation des radialen Abstands zwischen der äußeren Heizwicklung und der inneren Heizwicklung kann beim Aufwickeln der äußeren Heizwicklung beispielsweise dadurch erzielt werden, dass auf das Rohr beim Aufwickeln auf die innere Heizwicklung eine Zugspannung ausgeübt wird, die im Bereich von mindestens einem ersten Windungsabschnitt zwischen zwei einander unmittelbar benachbarten Abstandshaltern größer oder kleiner gewählt wird als in den benachbarten Windungsabschnitten. Zur Verringerung des radialen Abstands kann auf das Rohr im Bereich zwischen zwei Abstandshaltern eine größere Zugspannung ausgeübt werden als in den Windungsabschnitten vor und nach diesen beiden Abstandshaltern. Soll der radiale Abstand vergrößert werden, so kann die auf das Rohr beim Aufwickeln auf die innere Heizwicklung ausgeübte Zugspannung reduziert werden.

Es kann auch vorgesehen sein, dass beim Aufwickeln des Rohrs auf die innere Heizwicklung Wicklungshilfen zum Einsatz kommen, deren Gestalt so gewählt wird, dass zumindest eine Windung der äußeren Heizwicklung in mindestens einem ersten Windungsabschnitt einen kleineren oder größeren Abstand zur inneren Heizwicklung aufweist als im Bereich der Abstandshalter. Die Wicklungshilfen können beispielsweise sichelförmig mit unterschiedlichen Krümmungsradien ausgestaltet sein. Alternativ kann auch vorgesehen sein, dass die Wicklungshilfen identisch ausgebildet sind und somit einen gleich bleibenden Abstand zwischen der inneren und der äußeren Heizwicklung vorgeben, dass aber beim Aufwickeln des Rohrs auf die innere Heizwicklung im Bereich einzelner Windungsabschnitte zwischen zwei einander unmittelbar benachbarten Abstandshaltern die Wicklungshilfen entfallen, so dass sich in diesen Windungsabschnitten ein kleinerer radialer Abstand zur inneren Heizwicklung einstellt.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht durch einen Brenner für ein Hochdruckreinigungsgerät mit einem erfindungsgemäßen Wärmetauscher;

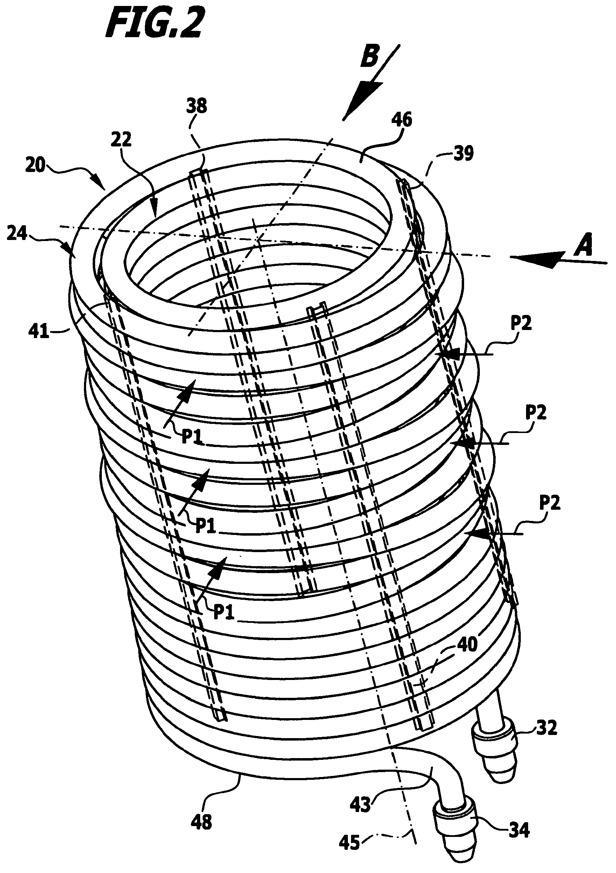

- Figur 2:: eine perspektivische Darstellung des Wärmetauschers aus Figur 1;
- Figur 3:: eine Seitenansicht des Wärmetauschers in Richtung von Pfeil A aus Figur 2;
- Figur 4:: eine Schnittansicht längs der Linie 4-4 in Figur 3 bei der Herstellung des Wärmetauschers;
- Figur 5:: eine Seitenansicht des Wärmetauschers in Richtung von Pfeil B aus Figur 2;
- Figur 6:: eine Schnittansicht längs der Linie 6-6 in Figur 5 bei der Herstellung des Wärmetauschers, und
- Figur 7:: eine vergrößerte Teilschnittansicht des Wärmetauschers aus Figur 2 in Längsrichtung.

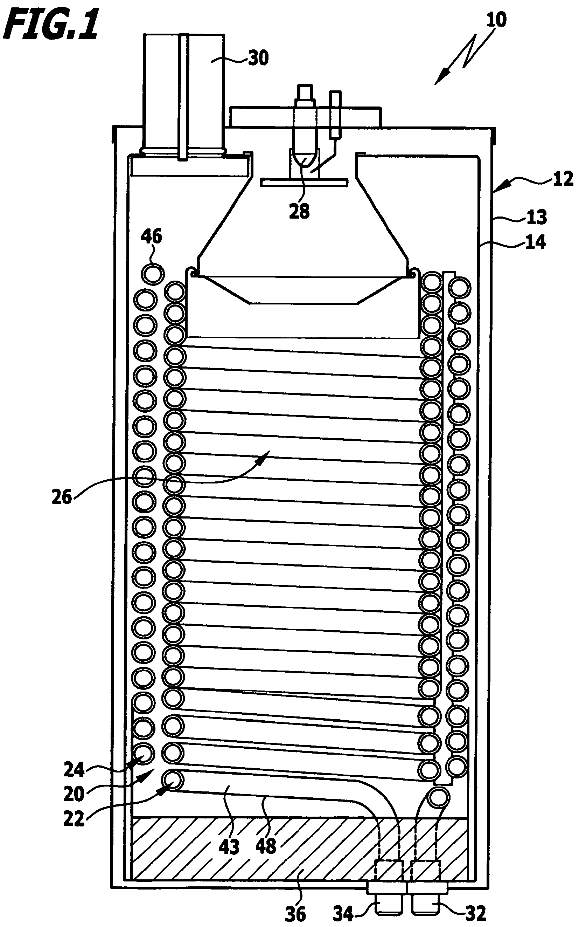

In Figur 1 ist schematisch ein Brenner 10 dargestellt in Form eines Durchlauferhitzers, der bei einem Hochdruckreinigungsgerät zum Einsatz kommen kann, um eine Reinigungsflüssigkeit, vorzugsweise Wasser, auf eine gewünschte Temperatur zu erhitzen. Der Brenner 10 umfasst einen zylindrischen Kessel 12 mit einer Außenwand 13 und einer Innenwand 14. Im Kessel 12 ist ein erfindungsgemäßer Wärmetauscher 20 angeordnet, der in Form einer Doppelrohrwendel ausgebildet ist und eine innere Heizwicklung 22 und eine äußere Heizwicklung 24 umfasst, die aus einem Metallrohr 43 gewickelt sind. Darauf wird nachfolgend noch näher eingegangen.

Die innere Heizwicklung 22 umgibt einen Brennraum 26. An einer Oberseite des Kessels 12 ist eine Brennerdüse 28 angeordnet, der in üblicher und deshalb in der Zeichnung nicht dargestellter Weise ein Brennstoff zugeführt werden kann, so dass im Brennraum 26 eine Flamme gezündet werden kann. Über ein in der Zeichnung nicht dargestelltes, dem Fachmann an sich bekanntes Luftzuführungsrohr kann dem Brennraum 26 Frischluft zugeführt werden, und die Abgase können über ein neben der Brennerdüse 28 angeordnetes Abluftrohr 30 abgeführt werden.

Während des Betriebes des Brenners wird der Wärmetauscher 20 von der zu erhitzenden Reinigungsflüssigkeit durchströmt. Die zu erhitzende Flüssigkeit wird dem Wärmetauscher über einen ersten Anschluss 32 zugeführt und die erhitzte Flüssigkeit kann vom Wärmetauscher über einen zweiten Anschluss 34 abgeführt werden. Die beiden Anschlüsse 32 und 34 sind an einer der Brennerdüse 28 abgewandten Bodenplatte 36 des Kessels 12 angeordnet.

Zwischen der inneren Heizwicklung 22 und der äußeren Heizwicklung 24 sind insgesamt vier Abstandshalter 38, 39, 40 und 41 angeordnet, die identisch ausgebildet sind und sich jeweils über die gesamte Länge der inneren Heizwicklung 22 erstrecken. Sie sind über den Umfang der inneren Heizwicklung 22 gleichmäßig verteilt angeordnet, so dass zwei einander in Umfangsrichtung unmittelbar benachbarte Abstandshalter jeweils einen Winkelbereich von 90° zwischen sich definieren.

Wie bereits erwähnt, werden die beiden Heizwicklungen 22, 24 aus einem Rohr 43 gewickelt. In einem ersten Schritt wird hierbei aus dem Rohr 43 die zylindrische innere Heizwicklung 22 gewickelt. Anschließend werden die Abstandshalter 38, 39, 40 und 41 mit der Außenseite der inneren Heizwicklung 22 verschweißt. Bei einem ersten erfindungsgemäßen Herstellungsverfahren wird dann die äußere Heizwicklung 24 auf die Abstandshalter 38, 39, 40 und 41 aufgewickelt, so dass die äußere Heizwicklung 24 zunächst ebenso wie die innere Heizwicklung 22 eine zylindrische Form aufweist mit einer Vielzahl von kreiszylindrischen Windungen, die sich in Umfangsrichtung jeweils über 360° erstrecken. Es kann vorgesehen sein, dass einzelne oder alle Windungen der äußeren Heizwicklung 24 mit den Abstandshaltern 38 bis 41 verschweißt werden.

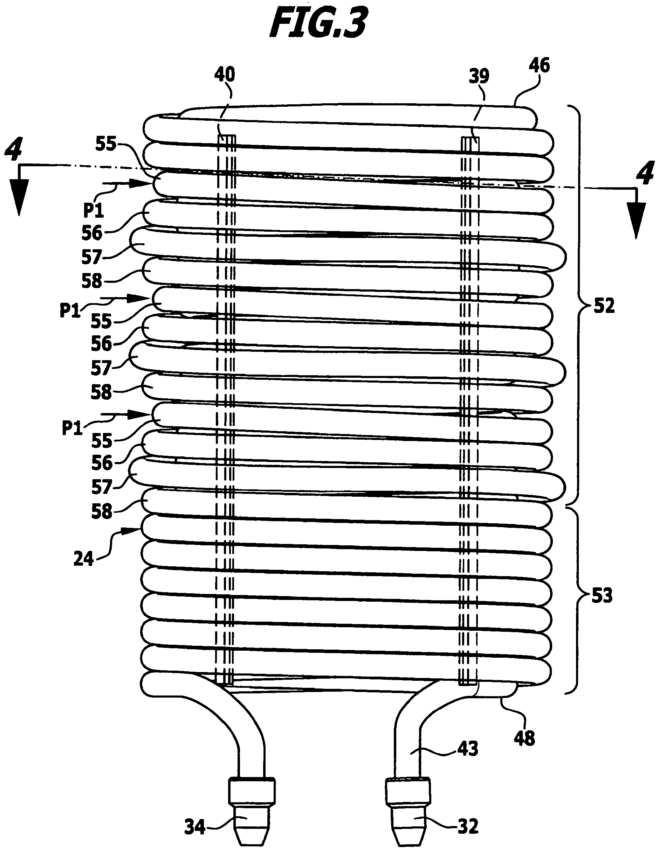

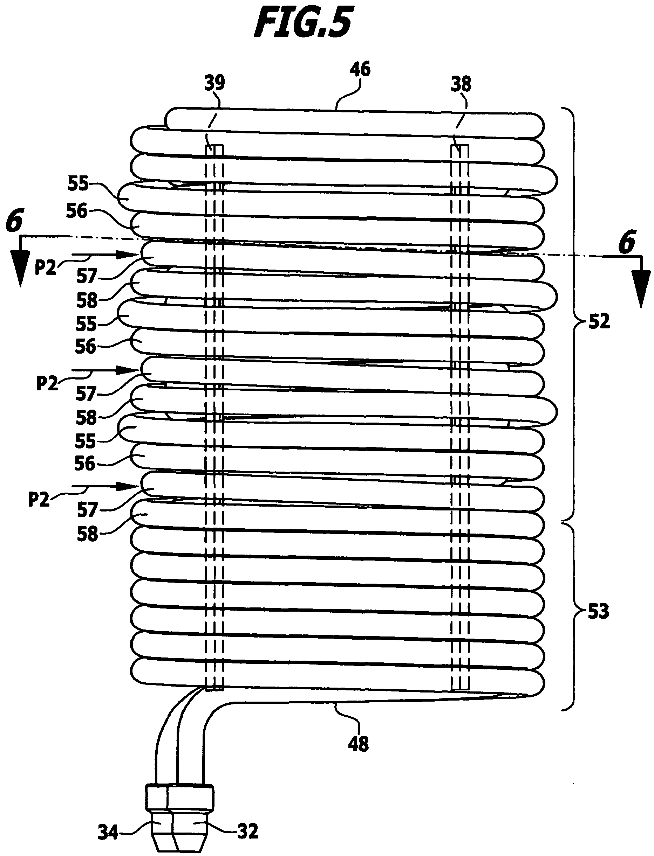

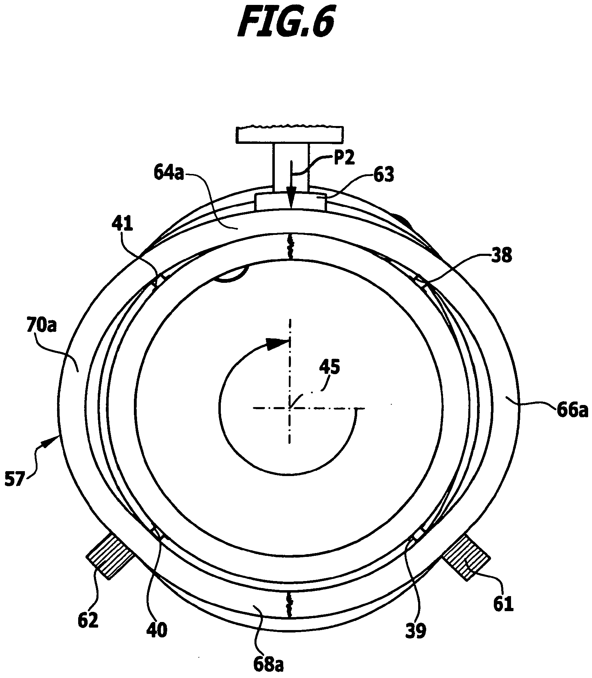

Beim ersten erfindungsgemäßen Herstellungsverfahren wird die äußere Heizwicklung 24 anschließend einem ersten Pressvorgang und einem zweiten Pressvorgang unterworfen, wobei sie zwischen den beiden Pressvorgängen um 270° um die Längsachse 45 des Wärmetauschers 20 verdreht und in axialer Richtung um zwei Windungen versetzt wird. Dies ist in den Figuren 3 bis 6 schematisch dargestellt.

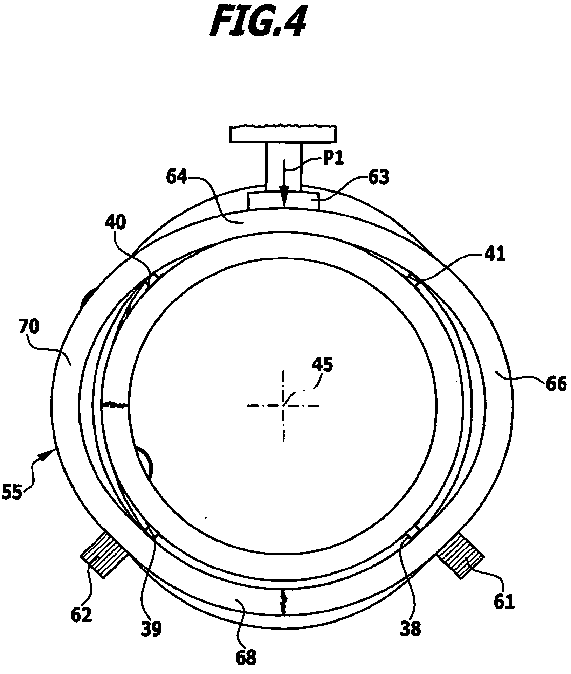

Die äußere Heizwicklung 24 umfasst einen ersten Teillängsbereich 52, der sich in Längsrichtung von der der Brennerdüse 28 zugewandten Oberseite 46 des Wärmetauschers 20 über circa 75% der Gesamtlänge des Wärmetauschers 20 in Richtung auf die der Brennerdüse 28 abgewandte Unterseite 48 erstreckt und in dem die Windungen der äußeren Heizwicklung in axialem Abstand zueinander angeordnet sind. An den ersten Teillängsbereich 52 schließt sich ein zweiter Teillängsbereich 53 an, der sich bis zur Unterseite 48 erstreckt und in dem die Windungen der äußeren Heizwicklung aneinander anliegen. Die Windungen der äußeren Heizwicklung 24 können im ersten Teillängsbereich 52 in mehrere Windungsgruppen zu jeweils 4 Windungen zusammengefasst werden. Jede Windungsgruppe umfasst eine erste Windung 55, eine zweite Windung 56, eine dritte Windung 57 und eine vierte Windung 58. Ein erster Pressvorgang erfolgt dergestalt, dass die äußere Heizwicklung 24 im Bereich des ersten Abstandshalters 38 und des zweiten Abstandshalters 39 mittels einer ersten Stütze 61 und einer zweiten Stütze 62 abgestützt wird, die an die Außenseite der äußeren Heizwicklung 24 angelegt werden. Mit Hilfe eines Pressstempels 63 werden dann gleichzeitig sämtliche ersten Windungen 55 der Windungsgruppen des ersten Teillängsbereichs 52 der äußeren Heizwicklung 24 mittig im Bereich zwischen dem dritten Abstandshalter 40 und dem vierten Abstandshalter 41 radial nach innen in Richtung auf die Längsachse 45 verformt. Der Pressstempel 63 ist derart ausgebildet, dass er im ersten Teillängsbereich 52 gleichzeitig an sämtliche ersten Windungen 55 angreifen und diese jeweils in einem ersten Windungsabschnitt 64, der sich zwischen dem dritten Abstandshalter 40 und dem vierten Abstandshalter 41 erstreckt, radial nach innen verformen kann. Nach der Verformung nimmt die äußere Heizwicklung 24 im ersten Windungsabschnitt 64 einen geringeren radialen Abstand zur inneren Heizwicklung 22 ein als im Bereich des dritten Abstandshalters 40 und des vierten Abstandshalters 41. Die radial nach innen gerichtete Verformung im Bereich des ersten Windungsabschnittes 64 hat zur Folge, dass sich der radiale Abstand, den die äußere Heizwicklung 24 zur inneren Heizwicklung 22 einnimmt, in einem in Umfangsrichtung an den ersten Windungsabschnitt 64 anschließenden zweiten Windungsabschnitt 66 sowie in einem dem ersten Windungsabschnitt 64 in Umfangsrichtung vorangehenden vierten Windungsabschnitt 70 vergrößert, wohingegen der radiale Abstand zwischen der äußeren Heizwicklung 24 und der inneren Heizwicklung 22 in dem dem ersten Windungsabschnitt 64 diametral gegenüberliegenden dritten Windungsabschnitt 68 aufgrund der Abstützung durch die erste Stütze 61 und die zweite Stütze 62 praktisch gleich bleibt. Der in Umfangsrichtung dem ersten Windungsabschnitt 64 folgende zweite Windungsabschnitt 66 der ersten Windungen 55 erstreckt sich zwischen dem vierten Abstandshalter 41 und dem sich in Umfangsrichtung an diesen anschließenden ersten Abstandshalter 38. Der dem ersten Windungsabschnitt 64 unmittelbar vorangehende vierte Windungsabschnitt 70 der ersten Windungen 55 erstreckt sich zwischen dem zweiten Abstandshalter 39 und dem dritten Abstandshalter 40, und der dem ersten Windungsabschnitt 64 diametral gegenüberliegende dritte Windungsabschnitt 68 der ersten Windungen 55 erstreckt sich zwischen dem ersten Abstandshalter 38 und dem sich in Umfangsrichtung an diesen anschließenden zweiten Abstandshalter 39. Dies wird aus Figur 4 deutlich.

Durch den ersten Pressvorgang, bei dem der erste Windungsabschnitt 64 der ersten Windungen 55 mit der in der Zeichnung durch den Pfeil P1 veranschaulichten Presskraft beaufschlagt wird, wird somit die äußere Heizwicklung 24 im Bereich der ersten Windungen 55 oval verformt. Beim dargestellten Ausführungsbeispiel der Erfindung beträgt der radiale Abstand zwischen der äußeren Heizwicklung 24 und der inneren Heizwicklung 22 im ersten Windungsabschnitt 64 minimal 10 % des Abstandes, den die beiden Heizwicklungen 24, 22 im Bereich der Abstandshalter 38 bis 41 aufweisen. Im Bereich des zweiten Windungsabschnittes 66 und auch im Bereich des vierten Windungsabschnittes 70 beträgt der radiale Abstand zwischen den beiden Heizwicklungen 24, 22 beim dargestellten Ausführungsbeispiel maximal 200 % des radialen Abstandes, den die Heizwicklungen im Bereich der Abstandshalter 38 bis 41 einnehmen. Die Abstandsvariation der äußeren Heizwicklung 24 über den Umfang des Wärmetauschers 20 ist in der Zeichnung zur besseren Übersicht vergrößert dargestellt.

Nachdem die äußere Heizwicklung 24 dem ersten Pressvorgang unterworfen wurde, wie dies in Figur 4 dargestellt ist, wird der Wärmetauscher 20 um 270° um seine Längsachse 45 gedreht und axial so weit relativ zum Pressstempel 63 versetzt, dass anschließend mittels des Pressstempels 63 jede dritte Windung 57 der Windungsgruppen des ersten Teillängsbereichs 52 der äußeren Heizwicklung 24 in einem ersten Windungsabschnitt 64a, der in Umfangsrichtung um 270° zum ersten Windungsabschnitt 64 der ersten Windungen 55 versetzt ist, mit einer radial in Richtung auf die Längsachse 45 gerichteten Presskraft P2 beaufschlagt wird. Aufgrund der Drehung um 270° stützt sich die äußere Heizwicklung 24 beim zweiten Pressvorgang im Bereich des zweiten Abstandshalters 39 und des dritten Abstandshalters 40 an den Stützen 61 und 62 ab und der erste Windungsabschnitt 64a der dritten Windungen 57, an dem der Pressstempel 63 anliegt, wird durch den vierten Abstandshalter 41 und den ersten Abstandshalter 38 begrenzt. In diesem ersten Windungsabschnitt 64a nimmt die äußere Heizwicklung 24 nach dem zweiten Pressvorgang einen kleineren radialen Abstand zur inneren Heizwicklung 22 ein als im Bereich der Abstandshalter 41 und 38. Demgegenüber vergrößert sich in dem zwischen dem ersten Abstandshalter 38 und dem zweiten Abstandshalter 39 angeordneten zweiten Windungsabschnitt 66a der dritten Windungen 57 der radiale Abstand zur inneren Heizwicklung 22 ebenso wie in dem vierten Windungsabschnitt 70a der dritten Windungen 57, der zwischen dem dritten Abstandshalter 40 und dem vierten Abstandshalter 41 angeordnet ist. Der dritte Windungsabschnitt 68a der dritten Windungen 57 ist zwischen dem zweiten Abstandshalter 39 und dem dritten Abstandshalter 40 angeordnet und erfährt aufgrund der Abstützung durch die Stützen 61 und 62 praktisch keine radiale Verformung.

Nachdem der Wärmetauscher 20 den beiden Pressvorgängen unterworfen wurde, ist die Herstellung des Wärmetauschers 20 abgeschlossen. Im ersten Teillängsbereich 52 weisen die ersten und dritten Windungen 55, 57 der Windungsgruppen der äußeren Heizwicklung 24 Windungsabschnitte mit einem radialen Abstand zur inneren Heizwicklung 22 auf, der größer oder kleiner ist als der Abstand, den die Windungen im Bereich der Abstandshalter 38 bis 41 zur inneren Heizwicklung 22 einnehmen. Der radiale Abstand, den die ersten und dritten Windungen 55, 57 zur inneren Heizwicklung 22 einnehmen, variiert somit über den Umfang des Wärmetauschers 20. Die einen kleineren radialen Abstand aufweisenden Windungsabschnitte 64a der dritten Windungen 55 sind zu den einen kleineren radialen Abstand aufweisenden Windungsabschnitten 64 der ersten Windungen 55 in Umfangsrichtung versetzt angeordnet. Zusätzlich befinden sich im ersten Teillängsbereich 52 Windungen, die entlang des Umfangs des Wärmetauschers 20 einen gleich bleibenden Abstand zur inneren Heizwicklung 22 aufweisen. Es handelt sich hierbei um die zweiten und vierten Windungen 56, 58 der voranstehend erläuterten Windungsgruppen. Die Windungen der äußeren Heizwicklung 24 sind im ersten Teillängsbereich 52 axial im Abstand zueinander angeordnet. Die Windungen der inneren Heizwicklung 22 liegen in Höhe des ersten Teillängsbereichs 52 unmittelbar aneinander an und sind kreisförmig ausgestaltet.

Im zweiten Teillängsbereich 53 werden die Windungen der äußeren Heizwicklung 24 nicht in der voranstehend genannten Weise in radialer Richtung verformt. Sie weisen daher über den Umfang des Wärmetauschers 20 einen gleich bleibenden Abstand zur inneren Heizwicklung 22 auf. Im zweiten Teillängsbereich 53 liegen die Windungen der äußeren Heizwicklung 24 aneinander an. Die Windungen der inneren Heizwicklung 22 sind im zweiten Teillängsbereich 53 zueinander beabstandet.

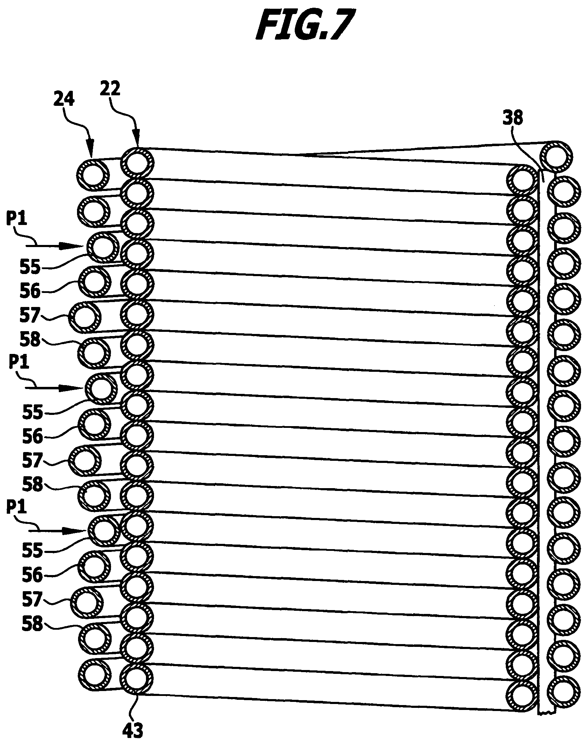

Die radiale Verformung von Windungen der äußeren Heizwicklung 24 hat eine in radialer Richtung versetzte Anordnung einzelner Windungsabschnitte zwischen den Abstandshaltern 38 bis 41 zur Folge. Dies wird insbesondere aus Figur 7 deutlich und ermöglicht einen verbesserten Wärmeübergang von der erhitzten Luft im Brennraum 26 auf die den Wärmetauscher 20 durchströmende Reinigungsflüssigkeit. Der Wärmetauscher 20 zeichnet sich daher durch einen hohen Wirkungsgrad aus. Die Herstellung des Wärmetauschers 20 ist verhältnismäßig einfach. In der dargestellten Ausführungsform kommen nur vier Abstandshalter 38 bis 41 zum Einsatz, die identisch ausgebildet sind. Zunächst wird eine zylindrische innere Heizwicklung 22 und dann eine zylindrische äußere Heizwicklung 24 aus dem Rohr 43 gewickelt. Durch anschließende Pressvorgänge kann auf einfache Weise eine ovale Verformung einzelner Windungen der äußeren Heizwicklung 24 erzielt werden.

Anstatt die äußere Heizwicklung 24 in einzelnen Windungsabschnitten zu verformen, ist bei einem zweiten erfindungsgemäßen Herstellungsverfahren vorgesehen, dass die unterschiedlichen Abstände, die die äußere Heizwicklung in einzelnen Windungsabschnitten zur inneren Heizwicklung aufweist, bereits bei der Herstellung der äußeren Heizwicklung 24 erzielt werden. Hierzu wird beim Aufwickeln des Rohrs 43 auf die innere Heizwicklung 22 und die Abstandshalter 38, 39, 40 und 41 in einzelnen Windungsabschnitten eine größere oder kleinere Zugspannung ausgeübt als in den benachbarten Windungsabschnitten. Durch die Änderung der Zugspannung, die auf das Rohr 43 ausgeübt wird, kann im Bereich zwischen zwei einander unmittelbar benachbarten Abstandshaltern ein kleinerer oder größerer radialer Abstand zur inneren Heizwicklung 22 erzielt werden. Außerdem können vorzugsweise sichelförmige Wicklungshilfen zum Einsatz kommen, die an die Außenseite der inneren Heizwicklung 22 angelegt werden, so dass sich das Rohr 43 beim Aufwickeln daran abstützen kann. Durch Einsatz von Wicklungshilfen mit unterschiedlichen Breiten können auf einfache Weise in einzelnen Windungsabschnitten zwischen benachbarten Abstandshaltern unterschiedliche radiale Abstände zwischen der äußeren Heizwicklung 24 und der inneren Heizwicklung 22 erzielt werden. Ein nach Herstellung der äußeren Heizwicklung 24 erfolgender Verformungsvorgang kann dadurch entfallen.

## Patentansprüche

1. Wärmetauscher zum Erhitzen einer Flüssigkeit, insbesondere für Hochdruckreiniger, mit einer inneren und einer äußeren Heizwicklung (22, 24), die jeweils eine Vielzahl von Windungen aufweisen, und mit Abstandshaltern (38, 39, 40, 41), die zwischen der inneren Heizwicklung (22) und der äußeren Heizwicklung (24) über den Umfang der inneren Heizwicklung (22) verteilt angeordnet sind, **dadurch gekennzeichnet, dass** mindestens eine Windung (55, 57) der äußeren Heizwicklung (24) zwischen zwei einander unmittelbar benachbarten Abstandshaltern (40, 41) einen ersten Windungsabschnitt (64, 64a) aufweist, in dem der radiale Abstand zur inneren Heizwicklung (22) kleiner oder größer ist als im Bereich der Abstandshalter (40, 41).

2. Wärmetauscher nach Anspruch 1, **dadurch gekennzeichnet, dass** mehrere Windungen (55, 57) der äußeren Heizwicklung (24) jeweils zwischen zwei einander unmittelbar benachbarten Abstandshaltern (40, 41) einen ersten Windungsabschnitt (64, 64a) aufweisen, in dem der radiale Abstand zur inneren Heizwicklung (22) kleiner oder größer ist als im Bereich der Abstandshalter (40, 41).

3. Wärmetauscher nach Anspruch 1, **dadurch gekennzeichnet, dass** mehrere Windungen (55, 57) der äußeren Heizwicklung (24) jeweils einen ersten Windungsabschnitt (64, 64a) aufweisen, in dem der Abstand zur inneren Heizwicklung (22) kleiner oder größer ist als im Bereich der Abstandshalter (40, 41), wobei die ersten Windungsabschnitte (64, 64a) von mindestens zwei Windungen (55, 57) in Umfangsrichtung der äußeren Heizwicklung (24) versetzt zueinander angeordnet sind.

4. Wärmetauscher nach Anspruch 3, **dadurch gekennzeichnet, dass** die ersten Windungsabschnitte (64, 64a) der mindestens zwei Windungen (55, 57) um 270° versetzt zueinander angeordnet sind.

5. Wärmetauscher nach Anspruch 1, **dadurch gekennzeichnet, dass** mehrere Windungen der äußeren Heizwicklung (24) in demselben Umfangsbereich jeweils einen ersten Windungsabschnitt (64, 64a) aufweisen, in dem der radiale Abstand zur inneren Heizwicklung (22) kleiner oder größer ist als im Bereich der Abstandshalter.

6. Wärmetauscher nach einem der voranstehenden Ansprüche, **dadurch gekennzeichnet, dass** zumindest eine Windung (55, 57) der äußeren Heizwicklung (24) in einem ersten Windungsabschnitt (64, 64a) zwischen zwei einander in Umfangsrichtung unmittelbar benachbarten Abstandshaltern (40, 41) einen kleineren radialen Abstand zur inneren Heizwicklung (22) aufweist als im Bereich der beiden Abstandshalter (40, 41), und dass sich in Umfangsrichtung der äußeren Heizwicklung an den ersten Windungsabschnitt (64, 64a) ein zweiter Windungsabschnitt (66, 66a) anschießt, in dem der radiale Abstand zur inneren Heizwicklung (22) größer ist als im Bereich der beiden Abstandshalter (40, 41).

7. Wärmetauscher nach einem der voranstehenden Ansprüche, **dadurch gekennzeichnet, dass** die Abstandshalter (38, 39, 40, 41) über ihre gesamte Länge einen gleich bleibenden Abstand zwischen der inneren und der äußeren Heizwicklung (22, 24) definieren.

8. Wärmetauscher nach einem der voranstehenden Ansprüche, **dadurch gekennzeichnet, dass** der radiale Abstand, den die äußere Heizwicklung (24) in dem mindestens einen ersten Windungsabschnitt (64, 64a) zur inneren Heizwicklung (22) einnimmt, minimal 10 % des radialen Abstandes beträgt, den die äußere Heizwicklung (24) im Bereich der den ersten Windungsabschnitt (64, 64a) begrenzenden Abstandshalter (40, 41) zur inneren Heizwicklung (22) einnimmt.

9. Wärmetauscher nach einem der voranstehenden Ansprüche, **dadurch gekennzeichnet, dass** die innere Heizwicklung (22) kreiszylindrisch ausgestaltet ist.

10. Wärmetauscher nach einem der voranstehenden Ansprüche, **dadurch gekennzeichnet, dass** die äußere Heizwicklung (24) einen ersten Teillängsbereich (52) umfasst, in dem der mindestens eine erste Windungsabschnitt (64, 64a) angeordnet ist, und dass sich in Längsrichtung der äußeren Heizwicklung (24) an den ersten Teillängsbereich (52) ein zweiter Teillängsbereich (53) anschließt, in dem die äußere Heizwicklung (24) einen gleich bleibenden Abstand zur inneren Heizwicklung (22) aufweist.

11. Wärmetauscher nach Anspruch 10, **dadurch gekennzeichnet, dass** die in Höhe des ersten Teillängsbereiches (52) angeordneten Windungen der inneren Heizwicklung (22) unmittelbar aneinander anliegen.

12. Wärmetauscher nach Anspruch 10 oder 11, **dadurch gekennzeichnet, dass** zumindest einige der in Höhe des zweiten Teillängsbereiches (53) angeordneten Windungen der inneren Heizwicklung (22) in axialem Abstand zueinander angeordnet sind.

13. Wärmetauscher nach einem der Ansprüche 10 bis 12, **dadurch gekennzeichnet, dass** zumindest einige Windungen der äußeren Heizwicklung (24) im ersten Teillängsbereich (52) in axialem Abstand zueinander angeordnet sind.

14. Verfahren zur Herstellung eines Wärmetauschers nach einem der voranstehenden Ansprüche, wobei aus einem Rohr (43) eine innere Heizwicklung (22) gewickelt wird, an der Außenseite der inneren Heizwicklung (22) mehrere Abstandshalter (38, 39, 40, 41) über den Umfang der inneren Heizwicklung (22) verteilt angeordnet und fixiert werden, und aus dem Rohr (43) eine äußere Heizwicklung (24) auf die Abstandshalter (38, 39, 40, 41) gewickelt wird, **dadurch gekennzeichnet, dass** mindestens eine erste Windung (55) der äußeren Heizwicklung (24) in mindestens einem ersten Windungsabschnitt (64) zwischen zwei einander unmittelbar benachbarten Abstandshaltern (40, 41) in Richtung auf die innere Heizwicklung (22) verformt wird.

15. Verfahren nach Anspruch 14, **dadurch gekennzeichnet, dass** mehrere Windungen (55) der äußeren Heizwicklung (24) gleichzeitig jeweils in einem ersten Windungsabschnitt (64) zwischen zwei einander unmittelbar benachbarten Abstandshaltern (40, 41) in Richtung auf die innere Heizwicklung (22) verformt werden.

16. Verfahren nach Anspruch 14 oder 15, **dadurch gekennzeichnet, dass** der Wärmetauscher (20) nach dem Verformen von mindestens einer Windung (55) um die Längsachse (45) des Wärmetauschers (20) gedreht wird und anschließend mindestens eine weitere Windung (57) der äußeren Heizwicklung (24) in einem ersten Windungsabschnitt (64a) zwischen zwei einander unmittelbar benachbarten Abstandshaltern (41, 38) in Richtung auf die innere Heizwicklung (22) verformt wird.

17. Verfahren nach Anspruch 16, **dadurch gekennzeichnet, dass** der Wärmetauscher nach dem Verformen der mindestens einen ersten Windung (55) um 270° gedreht wird.

18. Verfahren nach Anspruch 14 oder 15, **dadurch gekennzeichnet, dass** der Wärmetauscher (20) nach dem Verformen von mindestens einer Windung relativ zu einem Pressstempel (63) in Richtung der Längsachse (45) des Wärmetauschers (20) versetzt wird und anschließend mindestens eine weitere Windung (57) der äußeren Heizwicklung (24) in einem ersten Windungsabschnitt zwischen zwei einander unmittelbar benachbarten Abstandshaltern in Richtung auf die innere Heizwicklung (22) verformt wird.

19. Verfahren nach Anspruch 18, **dadurch gekennzeichnet, dass** der Wärmetauscher (20) nach dem Verformen von mindestens einer Windung (55) soweit relativ zu einem Pressstempel (63) axial versetzt wird, dass sich zwischen der bereits verformten Windung (55) und einer nachfolgend zu verformenden weiteren Windung (57) mindestens eine unverformte Windung (56) erstreckt.

20. Verfahren nach einem der Ansprüche 14 bis 19, **dadurch gekennzeichnet, dass** zumindest einige Windungen der äußeren Heizwicklung (24) mit den Abstandshaltern (38, 39, 40, 41) verschweißt werden.

21. Verfahren zur Herstellung eines Wärmetauschers nach einem der Ansprüche 1 bis 13, wobei aus einem Rohr (43) eine innere Heizwicklung (22) gewickelt wird, an der Außenseite der inneren Heizwicklung (22) mehrere Abstandshalter (38, 39, 40, 41) über den Umfang der inneren Heizwicklung (22) verteilt angeordnet und fixiert werden, und aus dem Rohr (43) eine äußere Heizwicklung (24) auf die Abstandshalter (38, 39, 40, 41) gewickelt wird, **dadurch gekennzeichnet, dass** das Rohr (43) beim Herstellen der äußeren Heizwicklung (24) in mindestens einem Windungsabschnitt zwischen zwei einander unmittelbar benachbarten Abstandshaltern (40, 41) in einem radialen Abstand zur inneren Heizwicklung (22) auf die innere Heizwicklung (22) aufgewickelt wird, der größer oder kleiner ist als der Abstand, den das Rohr (43) im Bereich der Abstandshalter (40, 41) aufweist.

22. Verfahren nach Anspruch 21, **dadurch gekennzeichnet, dass** auf das Rohr (43) beim Aufwickeln auf die innere Heizwicklung (22) eine Zugspannung ausgeübt wird, die im Bereich von mindestens einem ersten Windungsabschnitt zwischen zwei einander unmittelbar benachbarten Abstandshaltern (40, 41) größer oder kleiner gewählt wird als in den benachbarten Windungsabschnitten.

## Claims

1. Heat exchanger for heating a liquid, in particular, for high-pressure cleaners, comprising an inner and an outer heating coil (22, 24) which each have a plurality of turns, and comprising spacers (38, 39, 40, 41) which are arranged between the inner heating coil (22) and the outer heating coil (24) and are distributed over the circumference of the inner heating coil (22), **characterized in that** at least one turn (55, 57) of the outer heating coil (24) comprises between two spacers (40, 41) immediately adjacent to each other a first turn section (64, 64a) in which the radial spacing from the inner heating coil (22) is smaller or larger than in the region of the spacers (40, 41).

2. Heat exchanger in accordance with claim 1, **characterized in that** several turns (55, 57) of the outer heating coil (24) each comprise between two spacers (40, 41) immediately adjacent to each other a first turn section (64, 64a) in which the radial spacing from the inner heating coil (22) is smaller or larger than in the region of the spacers (40, 41).

3. Heat exchanger in accordance with claim 1, **characterized in that** several turns (55, 57) of the outer heating coil (24) each comprise a first turn section (64, 64a) in which the spacing from the inner heating coil (22) is smaller or larger than in the region of the spacers (40, 41), the first turn sections (64, 64a) of at least two turns (55, 57) being arranged so as to be offset from each other in the circumferential direction of the outer heating coil (24).

4. Heat exchanger in accordance with claim 3, **characterized in that** the first turn sections (64, 64a) of the at least two turns (55, 57) are arranged so as to be offset from each other through 270°.

5. Heat exchanger in accordance with claim 1, **characterized in that** several turns of the outer heating coil (24) each comprise in the same circumferential region a first turn section (64, 64a) in which the radial spacing from the inner heating coil (22) is smaller or larger than in the region of the spacers.

6. Heat exchanger in accordance with any one of the preceding claims, **characterized in that** at least one turn (55, 57) of the outer heating coil (24) has in a first turn section (64, 64a) between two spacers (40, 41) immediately adjacent to each other in the circumferential direction a smaller radial spacing from the inner heating coil (22) than in the region of the two spacers (40, 41), and **in that** the first turn section (64, 64a) is followed in the circumferential direction of the outer heating coil by a second turn section (66, 66a) in which the radial spacing from the inner heating coil (22) is larger than in the region of the two spacers (40, 41).

7. Heat exchanger in accordance with any one of the preceding claims, **characterized in that** the spacers (38, 39, 40, 41) define over their entire length a constant spacing between the inner and the outer heating coil (22, 24).

8. Heat exchanger in accordance with any one of the preceding claims, **characterized in that** the radial spacing which the outer heating coil (24) assumes from the inner heating coil (22) in the at least one first turn section (64, 64a) is at least 10 % of the radial spacing which the outer heating coil (24) assumes from the inner heating coil (22) in the region of the spacers (40, 41) delimiting the first turn section (64, 64a).

9. Heat exchanger in accordance with any one of the preceding claims, **characterized in that** the inner heating coil (22) is of circular-cylindrical configuration.

10. Heat exchanger in accordance with any one of the preceding claims, **characterized in that** the outer heating coil (24) comprises a first partial longitudinal region (52) in which the at least one first turn section (64, 64a) is arranged, and **in that** the first partial longitudinal region (52) is followed in the longitudinal direction of the outer heating coil (24) by a second partial longitudinal region (53) in which the outer heating coil (24) has a constant spacing from the inner heating coil (22).

11. Heat exchanger in accordance with claim 10, **characterized in that** the turns of the inner heating coil (22) which are arranged at the level of the first partial longitudinal region (52) lie directly against one another.

12. Heat exchanger in accordance with claim 10 or 11, **characterized in that** at least some of the turns of the inner heating coil (22) which are arranged at the level of the second partial longitudinal region (53) are arranged at an axial spacing from one another.

13. Heat exchanger in accordance with any one of claims 10 to 12, **characterized in that** at least some turns of the outer heating coil (24) in the first partial longitudinal region (52) are arranged at an axial spacing from one another.

14. Method for the manufacture of a heat exchanger in accordance with any one of the preceding claims, wherein an inner heating coil (22) is wound from a pipe (43), several spacers (38, 39, 40, 41) distributed over the circumference of the inner heating coil (22) are arranged and fixed on the outer side of the inner heating coil (22), and an outer heating coil (24) is wound from the pipe (43) onto the spacers (38, 39, 40, 41), **characterized in that** at least one first turn (55) of the outer heating coil (24) in at least one first turn section (64) between two spacers (40, 41) immediately adjacent to each other is deformed in the direction towards the inner heating coil (22).

15. Method in accordance with claim 14, **characterized in that** several turns (55) of the outer heating coil (24) in a respective first turn section (64) between two spacers (40, 41) immediately adjacent to each other are simultaneously deformed in the direction towards the inner heating coil (22).

16. Method in accordance with claim 14 or 15, **characterized in that** after deformation of at least one turn (55), the heat exchanger (20) is turned about the longitudinal axis (45) of the heat exchanger (20) and subsequently at least one further turn (57) of the outer heating coil (24) in a first turn section (64a) between two spacers (41, 38) immediately adjacent to each other is deformed in the direction towards the inner heating coil (22).

17. Method in accordance with claim 16, **characterized in that** after deformation of the at least one first turn (55), the heat exchanger is turned through 270°.

18. Method in accordance with claim 14 or 15, **characterized in that** after deformation of at least one turn, the heat exchanger (20) is displaced relative to a press ram (63) in the direction of the longitudinal axis (45) of the heat exchanger (20) and subsequently at least one further turn (57) of the outer heating coil (24) in a first turn section between two spacers immediately adjacent to each other is deformed in the direction towards the inner heating coil (22).

19. Method in accordance with claim 18, **characterized in that** after deformation of at least one turn (55), the heat exchanger (20) is axially displaced relative to a press ram (63) to such an extent that at least one undeformed turn (56) extends between the turn (55) already deformed and a further turn (57) to be subsequently deformed.

20. Method in accordance with any one of claims 14 to 19, **characterized in that** at least some turns of the outer heating coil (24) are welded to the spacers (38, 39, 40, 41).

21. Method for the manufacture of a heat exchanger in accordance with any one of claims 1 to 13, wherein an inner heating coil (22) is wound from a pipe (43), several spacers (38, 39, 40, 41) distributed over the circumference of the inner heating coil (22) are arranged and fixed on the outer side of the inner heating coil (22), and an outer heating coil (24) is wound from the pipe (43) onto the spacers (38, 39, 40, 41), **characterized in that** during manufacture of the outer heating coil (24), the pipe (43) in at least one turn section between two spacers (40, 41) immediately adjacent to each other is wound onto the inner heating coil (22) at a radial spacing from the inner heating coil (22), which is larger or smaller than the spacing which the pipe (43) has in the region of the spacers (40, 41).

22. Method in accordance with claim 21, **characterized in that** during the winding onto the inner heating coil (22) a tensile stress is exerted on the pipe (43), which in the region of at least one first turn section between two spacers (40, 41) immediately adjacent to each other is chosen so as to be greater or less than in the adjacent turn sections.

## Revendications

1. Echangeur de chaleur permettant de chauffer un liquide, en particulier pour des nettoyeurs haute pression, comprenant un enroulement chauffant interne et un enroulement chauffant externe (22, 24), qui présentent chacun une pluralité de spires, et des éléments d'écartement (38, 39, 40, 41), qui sont répartis sur le pourtour de l'enroulement chauffant interne (22) entre l'enroulement chauffant interne (22) et l'enroulement chauffant externe (24), **caractérisé en ce qu'**au moins une spire (55, 57) de l'enroulement chauffant externe (24) présente, entre deux éléments d'écartement (40, 41) directement voisins, une première partie de spire (64, 64a) dans laquelle la distance radiale par rapport à l'enroulement chauffant interne (22) est plus petite ou plus grande que dans la zone des éléments d'écartement (40, 41).

2. Echangeur de chaleur selon la revendication 1, **caractérisé en ce que** plusieurs spires (55, 57) de l'enroulement chauffant externe (24) présentent chacune, entre deux éléments d'écartement (40, 41) directement voisins, une première partie de spire (64, 64a) dans laquelle la distance radiale par rapport à l'enroulement chauffant interne (22) est plus petite ou plus grande que dans la zone des éléments d'écartement (40, 41).

3. Echangeur de chaleur selon la revendication 1, **caractérisé en ce que** plusieurs spires (55, 57) de l'enroulement chauffant externe (24) présentent chacune une première partie de spire (64, 64a) dans laquelle la distance par rapport à l'enroulement chauffant interne (22) est plus petite ou plus grande que dans la zone des éléments d'écartement (40, 41), les premières parties de spire (64, 64a) d'au moins deux spires (55, 57) étant décalées l'une de l'autre dans la direction périphérique de l'enroulement chauffant externe (24).

4. Echangeur de chaleur selon la revendication 3, **caractérisé en ce que** les premières parties de spire (64, 64a) des deux spires (55, 57) ou plus sont décalées l'une de l'autre de 270°.

5. Echangeur de chaleur selon la revendication 1, **caractérisé en ce que** plusieurs spires de l'enroulement chauffant externe (24) présentent dans la même zone périphérique respectivement une première partie de spire (64, 64a) dans laquelle la distance radiale par rapport à l'enroulement chauffant interne (22) est plus petite ou plus grande que dans la zone des éléments d'écartement.

6. Echangeur de chaleur selon l'une quelconque des revendications précédentes, **caractérisé en ce qu'**au moins une spire (55, 57) de l'enroulement chauffant externe (24) présente dans une première partie de spire (64, 64a), entre deux éléments d'écartement (40, 41) directement voisins l'un de l'autre dans la direction périphérique, une distance radiale par rapport à l'enroulement chauffant interne (22) plus petite que dans la zone des deux éléments d'écartement (40, 41), et **en ce que** dans la direction périphérique de l'enroulement chauffant externe, une deuxième partie de spire (66, 66a), dans laquelle la distance radiale par rapport à l'enroulement chauffant interne (22) est plus grande que dans la zone des deux éléments d'écartement (40, 41), est adjacente à la première partie de spire (64, 64a).

7. Echangeur de chaleur selon l'une quelconque des revendications précédentes, **caractérisé en ce que** les éléments d'écartement (38, 39, 40, 41) définissent sur toute leur longueur une distance constante entre l'enroulement chauffant interne et l'enroulement chauffant externe (22, 24).

8. Echangeur de chaleur selon l'une quelconque des revendications précédentes, **caractérisé en ce que** la distance radiale que l'enroulement chauffant externe (24) occupe dans la ou les première parties de spire (64, 64a) par rapport à l'enroulement chauffant interne (22), atteint au minimum 10 % de la distance radiale que l'enroulement chauffant externe (24) occupe dans la zone des éléments d'écartement (40, 41) délimitant la première partie de spire (64, 64a) par rapport à l'enroulement chauffant interne (22).

9. Echangeur de chaleur selon l'une quelconque des revendications précédentes, **caractérisé en ce que** l'enroulement chauffant interne (22) présente une conception cylindrique circulaire.

10. Echangeur de chaleur selon l'une quelconque des revendications précédentes, **caractérisé en ce que** l'enroulement chauffant externe (24) comprend une première zone longitudinale partielle (52) dans laquelle la ou les premières parties de spire (64, 64a) sont disposées, et **en ce que** dans la direction longitudinale de l'enroulement chauffant externe (24), une deuxième zone longitudinale partielle (53), dans laquelle l'enroulement chauffant externe (24) présente une distance constante par rapport à l'enroulement chauffant interne (22), est adjacente à la première zone longitudinale partielle (52).

11. Echangeur de chaleur selon la revendication 10, **caractérisé en ce que** les spires de l'enroulement chauffant interne (22) disposées au niveau de la première zone longitudinale partielle (52) reposent directement les unes contre les autres.

12. Echangeur de chaleur selon la revendication 10 ou 11, **caractérisé en ce qu'**au moins certaines des spires de l'enroulement chauffant interne (22) disposées au niveau de la deuxième zone longitudinale partielle (53) sont disposées selon une distance axiale les unes par rapport aux autres.

13. Echangeur de chaleur selon l'une quelconque des revendications 10 à 12, **caractérisé en ce qu'**au moins certaines spires de l'enroulement chauffant externe (24) sont disposées dans la première zone longitudinale partielle (52) selon une distance axiale les unes par rapport aux autres.

14. Procédé de fabrication d'un échangeur de chaleur selon l'une quelconque des revendications précédentes, un enroulement chauffant interne (22) étant enroulé à partir d'un tube (43), plusieurs éléments d'écartement (38, 39, 40, 41) étant répartis et fixés sur la face extérieure de l'enroulement chauffant interne (22) sur le pourtour de l'enroulement chauffant interne (22), et un enroulement chauffant externe (24) étant enroulé à partir du tube (43) sur les éléments d'écartement (38, 39, 40, 41), **caractérisé en ce qu'**au moins une première spire (55) de l'enroulement chauffant externe (24) est déformée dans au moins une première partie de spire (64) entre deux éléments d'écartement (40, 41) directement voisins en direction de l'enroulement chauffant interne (22).

15. Procédé selon la revendication 14, **caractérisé en ce que** plusieurs spires (55) de l'enroulement chauffant externe (24) sont déformées simultanément respectivement dans une première partie de spire (64) entre deux éléments d'écartement (40, 41) directement voisins en direction de l'enroulement chauffant interne (22).

16. Procédé selon la revendication 14 ou 15, **caractérisé en ce que** l'échangeur de chaleur (20), après la déformation d'au moins une spire (55), est amené en rotation autour de l'axe longitudinal (45) de l'échange de chaleur (20), puis au moins une autre spire (57) de l'enroulement chauffant externe (24) est déformée dans une première partie de spire (64a) entre deux éléments d'écartement (41, 38) directement voisins en direction de l'enroulement chauffant interne (22).

17. Procédé selon la revendication 16, **caractérisé en ce que** l'échangeur de chaleur est amené en rotation de 270° après la déformation de la ou des spires (55).

18. Procédé selon la revendication 14 ou 15, **caractérisé en ce que** l'échangeur de chaleur (20), après la déformation d'au moins une spire, est décalé d'un poinçon de presse (63) en direction de l'axe longitudinal (45) de l'échangeur de chaleur (20), puis au moins une autre spire (57) de l'enroulement chauffant externe (24) est déformée dans une première partie de spire entre deux éléments d'écartement directement voisins en direction de l'enroulement chauffant interne (22).

19. Procédé selon la revendication 18, **caractérisé en ce que** l'échangeur de chaleur (20), après la déformation d'au moins une spire (55), est décalé axialement d'un poinçon de presse (63) jusqu'à ce qu'au moins une spire (56) non déformée s'étende entre la spire (55) déjà déformée et une autre spire (57) à déformer par la suite.

20. Procédé selon l'une quelconque des revendications 14 à 19, **caractérisé en ce qu'**au moins certaines spires de l'enroulement chauffant externe (24) sont soudées aux éléments d'écartement (38, 39, 40, 41).

21. Procédé de production d'un échangeur de chaleur selon l'une quelconque des revendications 1 à 13, un enroulement chauffant interne (22) étant enroulé à partir d'un tube (43), plusieurs éléments d'écartement (38, 39, 40, 41) étant répartis et fixés sur la face extérieure de l'enroulement chauffant interne (22) sur le pourtour de l'enroulement chauffant interne (22), et un enroulement chauffant externe (24) étant enroulé à partir du tube (43) sur les éléments d'écartement (38, 39, 40, 41), **caractérisé en ce que** le tube (43), lors de la production de l'enroulement chauffant externe (24), est enroulé sur l'enroulement chauffant interne (22), dans au moins une partie de spire entre deux éléments d'écartement (40, 41) directement voisins, selon une distance radiale par rapport à l'enroulement chauffant interne (22) qui est plus grande ou plus petite que la distance que le tube (43) présente dans la zone des éléments d'écartement (40, 41).

22. Procédé selon la revendication 21, **caractérisé en ce qu'**une contrainte de traction, qui, dans la zone d'au moins une première partie de spire entre deux éléments d'écartement (40, 41) directement voisins, est sélectionnée pour être plus grande ou plus petite que dans les parties de spire voisines, est exercée sur le tube (43) lors de l'enroulement sur l'enroulement chauffant interne (22).
